# EUROPÄISCHE PATENTSCHRIFT

(11) **EP 0 904 642 B1**
(45) Veröffentlichungstag und Bekanntmachung des Hinweises auf die Patenterteilung: **17.12.2003**
(21) Anmeldenummer: 97928116.9
(22) Anmeldetag: 11.06.1997
(51) Int. Cl.: H04H 1/00, H04N 7/26

(54) **VERFAHREN UND ANORDNUNG FÜR EIN DIGITALES DATENSENDESYSTEM**
METHOD AND DEVICE FOR A DIGITAL DATA TRANSMISSION SYSTEM
PROCEDE ET DISPOSITIF POUR UN SYSTEME NUMERIQUE D'EMISSION DE DONNEES

(30) Priorität: 15.06.1996 DE 19623933
(43) Veröffentlichungstag der Anmeldung: 31.03.1999
(73) Patentinhaber: XSYS Interactive Research GmbH, 78050 Villingen-Schwenningen (DE)
(72) Erfinder: GRAF, Andreas, D-78056 Villingen-Schwenningen (DE); KESSLER, Rolf, D-78048 Villingen-Schwenningen (DE)
(74) Vertreter: Göhring, Robert, Dipl.-Ing.
(86) Internationale Anmeldenummer: DE9701172
(87) Internationale Veröffentlichungsnummer: WO97049206

(56) Entgegenhaltungen:
- EP-A- 0 609 017
- EP-A- 0 661 885
- EP-A- 0 669 765
- WO-A-95/01052
- US-A- 5 510 842

## Beschreibung

Die Erfindung betrifft ein Verfahren für ein digitales Datensendesystem zur Übertragung von Daten sowie Schaltungsanordnungen zur Durchführung des Verfahrens.

Digitale Datensendesysteme werden in digitalen Datenübertragungssystemen eingesetzt, um digitale Daten zu einem digitalen Datenempfangssystem zu senden, das die empfangenen Daten verarbeitet und einem Benutzer mittels eines Wiedergabegerätes wiedergibt.

Aus EP 0 609 017 ist ein Verfahren zur Übertragung von kodierten Blöcken eines Videosignals bekannt.

Ein Videobild wird in mehrere unterschiedliche Blöcke aufgeteilt. In Abhängigkeit von der Lage der Blöcke - beispielsweise obere Bildhälfte, Bildmitte und untere Bildhälfte - werden die Blöcke mit unterschiedlichen Datenraten übertragen.

Als Beispiel für ein digitales Datenübertragungssystem sind der digitale Hörfunk, der sogenannte Digital Audio Broadcasting, im weiteren Verlauf mit der gebräuchlichen Abkürzung DAB bezeichnet, die digitale Fernsehübertragung, im Englischen als Digital Video Broadcasting bekannt und im weiteren Verlauf mit der üblichen Abkürzung DVB bezeichnet, sowie Wiedergabegeräte für die digitale Videoplatte, die sogenannte Digital Video Disc oder Digital Versatile Disc, zu nennen, die im weiteren Verlauf wie meist üblich mit DVD abgekürzt wird.

Bei diesen digitalen Datenübertragungssystemen werden die zu übertragenden Daten komprimiert. Die Datenkompression kann nach unterschiedlichen. Verfahren vorgenommen werden. Bereits weltweit eingesetzt werden die sogenannten MPEG-Standards, um z.B. Audiooder Videodaten zu komprimieren. So arbeitet beispielsweise der in den USA eingeführte digitale Informationsdienst DirecTV auf der Basis der VIPEG-Standards.

Der wesentliche Vorteil digitaler Datenübertragungssysteme, die mit Datenkompression arbeiten, liegt nun darin, daß erheblich weniger Übertragungskapazität als bei nicht komprimierten Daten erforderlich ist, ohne daß die Qualität der Datenwiedergabe beeinträchtigt wird. Besonders deutlich zeigt sich dieser Vorteil beim DAB und beim DVB, wenn die Daten mittels Satellit, mittels Kabel oder terrestrisch übertragen werden, denn es wird weit weniger Kanalkapazität als bei den heute gebräuchlichen analogen Übertragungssystemen benötigt.

In den Systemen DVB und DVD werden die Audio- und Videodaten in komprimierter Form zum Benutzer übertragen. Bei DVB empfängt der Kunde die Daten via Satellit oder über ein Breitbandkabel. Bei DVD liest ein Wiedergabegerät, meist als Player bezeichnet, die Daten durch optische Abtastung von einer Kompaktplatte, der Digital Video Disc oder der Digital Versatile Disc.

In den beiden Systemen DVB und DVD ist die Menge der zu übertragenden komprimierten Videodaten höher als die Menge der zu übertragenden Audiodaten. Die Videodaten sind die Informationen, die für einen Bildschirm im Standardformat mit 720 horizontalen und 576 vertikalen Bildpunkten entsprechend der CCIR601-Spezifikation oder für einen kleinen Flüssigkeitskristallbildschirm - ein Display - benötigt werden. Derartige Displays geringerer Abmessungen mit kleinerer Bildauflösung finden bei Handgeräten der Computertechnik und in Autonavigationssystemen immer mehr Verbreitung. Aus der Vielfalt der heute gebräuchlichen Displays stellen die 5"-Displays mit einer Auflösung von 320 horizontalen und 273 vertikalen Bildpunkten aufgrund ihrer weiten Verbreitung bereits einen Quasistandard dar.

Das Ausmaß der Datenreduktion z.B. mittels MPEG2-Algorithmen und somit die Menge der komprimierten Videodaten stehen im Zusammenhang mit der Bildauflösung des Bildschirms, der beim Standardformat 720 horizontale und 576 vertikale Bildpunkte erzeugt. Weil mit steigender Datenreduktion Bildinformationen verloren gehen, nimmt jedoch ab einer bestimmten Größenordnung der Datenreduktion die Bildqualität sichtbar ab. Die Auswirkungen der Datenreduktion liegen bei DVB und DVD einerseits oberhalb der Grenze, bei der im Standardsystem der CCIR601-Norm die Bildqualität sichtbar verschlechtert wird. Andererseits ist die Datenreduktion jedoch groß genug gewählt, um deutlich die Übertragungs- und Speicherkapazitäten des Systems zu verringern. Bei DVB liegen die Kompressionsraten in dem Bereich von 1:40 bis 1:50. Das bedeutet, daß von 40 oder 50 originalen Videobits nur 1 Bit im MPEG2-Format übertragen oder gespeichert wird. Ein MPEG2-Dekodierer dekomprimiert diese Daten zu Videodaten für das Standardformat.

Ist anstelle eines Bildschirms für das Standardformat ein kleines 5"-Display vorgesehen, so ist trotz der geringeren Auflösung des kleinen 5"-Displays ein MPEG2-Dekodierer mit 16 bis 20 Mbit externem Speicher erforderlich, um die komprimierten Daten zu dekodieren. Der MPEG2-Dekodierer erzeugt die für das Standardformat erforderlichen 720 horizontalen und die 576 vertikalen Bildpunkte. Durch ein dem 5"-Display vorgeschaltetes Filter werden die 720 horizontalen Bildpunkte des Standardformats auf 320 horizontale Bildpunkte des 5"-Displays und die 576 vertikalen Bildpunkte des Standardformats auf die 273 vertikalen Bildpunkte des 5"-Displays reduziert.

Dies ist z.B. bei DVB der Fall, wenn die von einem Satelliten, über Kabel oder terrestrisch im MPEG2-Format ausgestrahlten Daten auf einem 5"-Display wiedergegeben werden. Jedoch auch die von einer DVD gelesenen Daten müssen zuerst mittels des MPEG2-Dekodierers dekodiert und mittels eines Filters reduziert werden, ehe sie z.B. in ein Standardbussystem eingespeist werden können, wie es in Fahrzeugen zur Datenübertragung von einem zentralen Wiedergabegerät für eine digitale Videoplatte zu mehreren Bildschirmen benutzt wird, denn die Bitrate der MPEG2-Daten liegt wesentlich höher als die vieler Standardbussysteme.

Die typische Bitrate der MPEG2-Daten beträgt bei DVB zwischen 10 und 40 Mbit/s, während sie bei DVD typischerweise zwischen 1 und 11 Mbit/s in variabler Datenrate vorliegt. Die in Fahrzeugen eingesetzten Standardbussysteme haben für derart hohe Bitraten eine viel zu geringe Bandbreite. So kann der beispielsweise in Autos eingesetzte D2B-Bus Daten mit einer Bitrate bis zu höchstens 1,4 Mbit/s übertragen; Datenströme mit höherer Bitrate lassen sich wegen der zu geringen Bandbreite des D2B-Buses nicht mehr übertragen. Es sind daher auch in diesem Anwendungsfall ein MPEG2-Dekodierer und ein Filter erforderlich, um die Bitrate auf das für den D2B-Bus erforderliche Maß zu reduzieren.

Ein wesentlicher Nachteil der beschriebenen digitalen Datenempfangssysteme liegt darin. daß ein teurer MPEG2-Dekodierer und ein Filter erforderlich sind, um die Daten in einen Kanal mit geringerer Bandbreite bzw. Datenrate einspeisen zu können, an dessen Ausgang z.B. ein 5"-Display angeschlossen sein kann.

Es ist daher Aufgabe der Erfindung, ein Datenübertragungssystem bestehend aus einem Datensende- und einem Datenempfangssystem so zu gestalten. daß das Datenübertragungssystem möglichst einfach und preisgünstig ausgebildet sein kann.

Eine erste Lösung dieser Aufgabe sieht vor, daß gleiche Informationen mit mindestens zwei unterschiedlichen Bit- bzw. Kompressionsraten ausgesendet werden, daß ein Demultiplexer eines von mehreren Programmen auswählt und in sogenannte Packetized Elementary Streams zerlegt oder bei Vorliegen nur eines Programms dieses Programm in die Packetized Elementary Streams zerlegt, daß ein Variable-Length-Dekodierer Run-Length-Wertepaare ermittelt, daß ein Bitstrommodifizierer die Datenmenge reduziert, daß diese reduzierte Datenmenge im Variable-Length-Kodierer kodiert wird, der von einem Bitratenkontroller in einen Datenstrom mit einer vorgebbaren Bitrate gewandelt wird, und daß der Bitratenkontroller den Bitstrommodifizierer über eine Steuerieitung synchronisiert, um ein Überlaufen oder Leerlaufen des Variable-Length-Kodierers (VLC) mit Daten zu verhindern.

Eine zweite Lösung dieser Aufgabe sieht vor, daß die Bitrate der von einer Datenquelle erzeugten Daten mittels eines Bitratenumsetzers in eine niedere Bitrate umgewandelt wird, bevor sie in einen Übertragungskanal eingespeist werden, daß die von der Datenquelle gelieferten Daten in einem Encoder kodiert werden und an den Bitratenumsetzer gesendet werden, daß im Bitratenumsetzer ein Demultiplexer eines von mehreren Programmen auswählt und in sogenannte Packetized Elementary Streams zerlegt oder bei Vorliegen nur eines Programms dieses Programm in die Packetized Elementary Streams zerlegt, daß ein Variable-Length-Dekodierer Run-Length-Wertepaare ermittelt, daß ein Bitstrommodifizierer die Datenmenge reduziert, daß diese reduzierte Datenmenge im Variable-Length-Kodierer kodiert wird, der von einem Bitratenkontroller in einen Datenstrom mit einer vorgebbaren Bitrate gewandelt wird, und daß der Bitratenkontroller den Bitstrommodifizierer über eine Steuerleitung synchronisiert, um ein Überlaufen oder Leerlaufen des Variable- Length-Kodierers mit Daten zu verhindern.

Es zeigen
- Figur 1: die erste erfindungsgemäße Lösung,
- Figur 2: ein Ausführungsbeispiel der ersten erfindungsgemäßen Lösung,
- Figur 3: die zweite erfindungsgemäße Lösung:

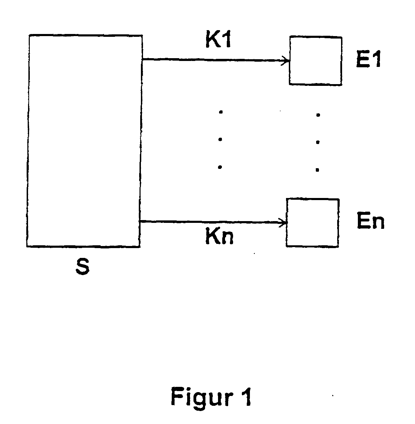

Die erste erfindungsgemäße Lösung wird nun an Hand der Figur 1 beschrieben und erläutert.

Ein digitales Datensendesystem S sendet gleichzeitig auf mehreren Kanälen K1 bis Kn, die beispielsweise Funkstrecken, IR-Strecken, Kabel oder Lichtleiter sein können, die gleichen Informationen mit unterschiedlichen Bit- bzw. Kompressionsraten zu mehreren Datenempfangssystemen E1 bis En, wobei die Bit- bzw. Kompressionsraten an die einzelnen Datenempfangssysteme angepaßt sind.

Wenn z.B. die von einem Wiedergaberät von einem DVB-System erzeugten Daten gleichzeitig auf einem Bildschirm mit der beim CCIR601-System üblichen Auflösung von 720 horizontalen und 576 vertikalen Bildpunkten und auf einem kleinen Bildschirm mit einer Auflösung von nur 320 x 273 Bildpunkten, einem 5"-Display, wiedergegeben werden sollen, so werden beim Stand der Technik die Daten auf einem Übertragungskanal mit der für den Bildschirm hoher Auflösung erforderlichen Bit- bzw. Kompressionsrate z.B. im MPEG2-Format übertragen. Um die Daten aber auch auf dem 5"-Display mit der kleinen Auflösung darstellen zu können, ist zusätzlicher technischer Aufwand im Datenempfangssystem erforderlich. Wie bereits erwähnt ist zusätzlich zu einem teuren MPEG2-Dekodierer ein Filter nötig, um die Daten im MPEG2-Format zu verarbeiten.

Dadurch daß das erste erfindungsgemäße Datensendesystem die gleichen Informationen gleichzeitig auf mehreren Kanälen mit unterschiedlichen an die Datenempfangssysteme angepaßten Bit- bzw. Kompressionsraten zu den Datenempfangssystemen sendet, können sie so einfach wie möglich gestaltet werden. Wenn z.B. das Datensendesystem Daten an ein Datenempfangssystem mit einem Bildschirm für die CCIR601-Norm und an eines mit einem 5"-Display sendet, so werden die Daten für den Bildschirm hoher Auflösung auf einem ersten Übertragungskanal im MPEG2-Format übertragen, während die Daten zu dem 5"-Display auf einem zweiten Übertragungskanal mit einer an das 5"-Display angepaßten Bit- bzw. Kompressionsrate übertragen werden. In den Datenempfangssystemen, weder beim Bildschirm der CCIR601-Norm noch beim 5"-Display, ist zusätzlicher technischer Aufwand erforderlich.

Besonders vorteilhaft ist es, wenn das erfindungsgemäße Datensendesystem die Daten in üblichen Standards aussendet, denn in diesem Fall lassen sich Datenempfangssysteme, die mit den gleichen Standards arbeiten, ohne technische Umrüstung und Anpassung anschließen.

Die Erfindung ist jedoch nicht auf ein DVB-System beschränkt. Sie ist auch für DAB, DVD und andere Datenübertragungssysteme geeignet.

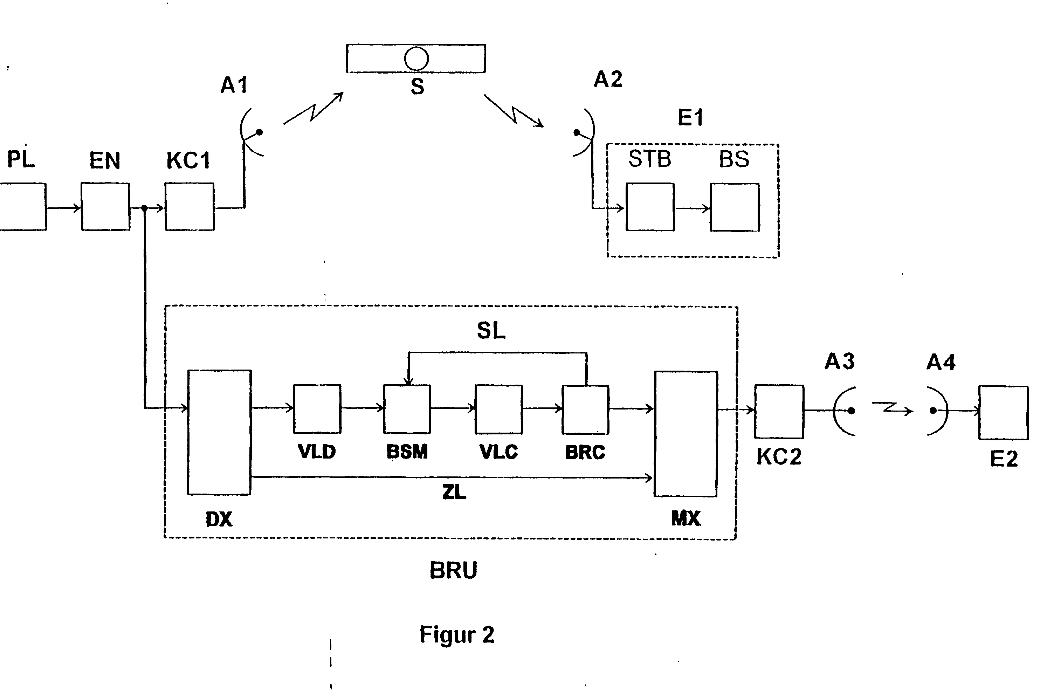

Es wird nun das in der Figur 2 abgebildete Ausführungsbeispiel der ersten erfindungsgemäßen Lösung zuerst beschrieben und anschließend erläutert.

Der Ausgang einer Datenquelle PL. z.B. ein Bandgerät, ist mit dem Eingang eines MPEG-Encoders EN verbunden, an dessen Ausgang ein Kanaldekodierer KC l und ein Demultiplexer DX angeschlossen sind. Anstelle eines Bandgerätes kann auch ein Wiedergabegerät für eine DVD vorgesehen sein. In diesem Fall ist der MPEG-Encoder nicht erforderlich, weil das Wiedergabegerät bereits Daten im MPEG-Format liefert.

Der Ausgang des Kanalkodierers KC1 ist mit einer Satellitensendeantenne A1 verbunden, die Daten zu einem Satelliten S sendet, der die Daten weiter an eine Satellitenempfanssantenne A2 sendet, an die ein Datenempfangssystem E1, bestehend aus einer sogenannten SET TOP BOX STB und einem Bildschirmgerät BS, angeschlossen ist. Wie üblich enthält die SET TOP BOX STB u.a. einen Tuner, einen Kanaldekodierer, einen Demultiplexer und einen MPEG-Dekodierer, die in der Figur 2 jedoch nicht dargestellt sind.

Der Ausgang des MPEG-Encoders EN ist außerdem mit einem Demultiplexer DX verbunden, dessen erster Ausgang, an dem die Videodaten abnehmbar sind, über eine Reihenschaltung aus einem Variable-Length-Dekodierer VLD, einem Bitstrommodifizierer BSM, einem Variable-Length-Kodierer VLC und einem Bitratenkontroller BRC an den ersten Eingang eines Multiplexers MX angeschlossen ist. Der Steuerausgang des Bitratenkontrollers BRC ist über eine Steuerleitung SL mit dem Steuereingang des Bitstrommodifizierers BSM verbunden.

Der zweite Ausgang des Demultiplexers DX, an dem die Audio- und Zusatzdaten anliegen, ist über eine zusätzliche Leitung ZL mit dem zweiten Eingang des Multiplexers MX verbunden, dessen Ausgang mit dem Eingang eines Kanalkodierers KC2 verbunden ist. An den Ausgang des Kanalkodierers KC2 ist eine Sendeantenne A3 angeschlossen, welche Daten über eine terrestrische Funkstrecke zu einer Empfangsantenne A4 sendet, an die ein Datenempfangssystem E2 angeschlossen ist.

Die vom Wiedergabegerät PL von einem Datenträger gelesenen Daten werden vom MPEG-Encoder EN gemäß dem MPEG2-Format kodiert und anschließend im Kanalkodierer KC1 an den Übertragungskanal angepaßt, der von der Satellitensendeantenne A1 über den Satelliten S zur Satellitenempfangsantenne A2 führt. Die von der Satellitenempfanasantenne A2 an das Datenempfangssystem E1 gelieferten Daten werden in der SET TOP BOX STB, die einen Tuner. einen Kanaldekodierer, einen Demultiplexer und einen MPEG-Dekodierer enthält. dekodiert und am Bildschirmgerät BS wiedergegeben.

Die gleichen Daten werden gleichzeitig auf einem zweiten Kanal übertragen. Von den vom MPEG-Encoder EN gelieferten Daten wählt der Demultiplexer DX ein Programm, z.B. ein Fernsehprogramm, aus und zerlegt es in sogenannte Packetized Elementary Streams, abgekürzt PES, die an den Variable-Length-Dekodierer VLD gesendet werden. Es gibt jeweils einen PES für die Video-, die Audio- und die Zusatzdaten. Liegt am Eingang des Demultiplexers DX ein Datenstrom mit nur einem Programm an, zerlegt der Demultiplexer DX diesen Datenstrom in die einzelnen PES. Die Bitrate des Video-PES liegt in einem Bereich von 4 bis 6 Mbit/s, während die der Audio- und Zusatz-PES um eine Zehnerpotenz niedriger liegt. Sind die vom Wiedergabegerät PL gelieferten Daten verschlüsselt, so werden sie von einem im Demultiplexer DX integrierten Entschlüssler entschlüsselt. Der Entschlüssler kann auch vor dem Demultiplexer DX angeordnet sein.

Während über die Reihenschaltung aus dem Variable-Length-Dekodierer VLD, dem Bitstrommodifizierer BSM, dem Variable Length-Kodierer VLC und dem Bitratenkontroller BRC die Videodaten in PES zerlegt zum Multiplexer MX übertragen werden, gelangen die Audio- und Zusatzdaten ebenfalls in PES zerlegt über die zusätzliche Leitung ZL vom Demultiplexer DX zum Multiplexer MX, der die Video-, die Audio- und die Zusatzdaten wieder zusammenfügt, um einen Standard-MPEG-Datenstrom oder einen modifizierten MPEG-Datenstrom zu erzeugen.

Im Variable-Length-Dekodierer VLD, der wesentlich einfacher als ein MPEG2-Dekodierer aufgebaut ist, werden aus den vom Demultiplexer DX gelieferten und nach der Variable-Length- Kodierung gemäß dem MPEG2-Format kodierten Daten die Run-Length-Wertepaare ermittelt, welche die Frequenzinformation für 8 x 8 Bildpunktblöcke bilden. Im Bitsrommodifizierer BSM werden die hohen vertikalen und die hohen horizontalen Frequenzen oberhalb eines vorgebbaren Grenzwertes zu null gesetzt. Der Bitsrommodifizierer BSM erzeugt deshalb ein Run-Length-Wertepaar, so daß alle Koeffizienten oberhalb eines vorgebbaren Schwellwertes null sind. Durch diese Maßnahme wird die zu übertragende Datenmenge beträchtlich verringert.

Eine weitere Maßnahme zur Reduzierung der Daten sieht eine Veränderung der Bewegungsvektoren vor, um die Anzahl der Vektorinformationen zu verringern. Durch Einfügen von Skipped Macroblocks läßt sich die Datenmenge ebenfalls verringern. Unter dem Einfügen von Skipped Macroblocks versteht man, daß nach vorgebbaren Kriterien einzelne Macroblocks nicht kodiert werden und daher keine Daten im Datenstrom erzeugen. Auch durch Wiederholen von Vorgängerbildern oder Vorgäugermacroblocks wird die Datenmenge verringert. Die angeführten Maßnahmen zur Reduzierung der Daten können beliebig miteinander kombiniert werden.

Diese reduzierte Datenmenge wird im Varible-Length-Kodierer VLC wieder in einen dem MPEG2-Format entsprechenden Datenstrom kodiert, der vom Bitratenkontroller BRC in einen Datenstrom mit einer vorgebbaren Bitrate gewandelt wird. Damit der Varible-Length Kodierer VLC weder mit Daten überläuft noch leerläuft, wird der Bitstrommodifizierer BSM vom Bitratenkontroller BRC über die Steuerleitung SL synchronisiert.

Die vom Multiplexer MX gelieferten Daten werden im Kanalkodierer KC2 an den zweiten Übertraguneskanal angepaßt; sie sind nun so aufbereitet, daß sie von der Sendeantenne A3 über eine terrestrische Funkstrecke zu einer Empfangsantenne A4 gesendet werden können, an die ein Empfangssystem E2 angeschlossen ist. Das Empfangssystem kann z.B. in einem Fahrzeug eingebaut sein, in dem ein oder mehrere 5"-Diplays zur Datenwiedergabe vorgesehen sein können.

Der Demultiplexer DX, der Variable-Length-Dekodierer VLD, der Bitstrommodifizierer BSM, der Variable-Length-Kodierer VLC, der Bitratenkontroller BRC sowie der Multiplexer MX bilden einen Bitratenumsetzer BRU.

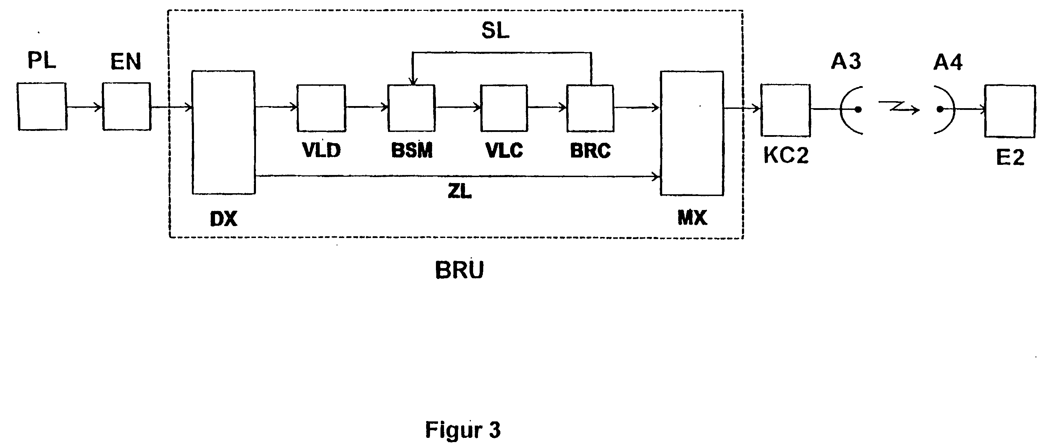

Die zweite erfinduagsgemäße Lösung ist in der Figur 3 abgebildet. Sie unterscheidet sich von der ersten erfindungsgemäßen Lösung aus der Figur 2 dadurch, daß der Kanalkodierer KC1 und der erste Übertragungskanal bestehend aus der Satellitensendeantenne A1, dem Satelliten S und der Satellitenempfangsantenne A2 sowie das Datenempfangssystem E1 entfallen. Die Daten werden nur auf einem Kanal übertragen.

Die Funktion der Anordnung aus der Datenquelle PL, dem MPEG-Encoder EN, dem Demultiplexer DX, dem Variable-Length-Dekodierer VLD, dem Bitstrommodifizierer BSM, dem Variable-Length-Kodierer VLC, dem Bitratenkontroller BRC, dem Multiplexer MX, dem Kanalkodierer KC2, der Sendeantenne A3, der Empfangsantenne A4 und dem Datenempfangssystem E2 ist bereits bei der Erläuterung der Figur 2 erklärt worden und braucht daher an dieser Stelle nicht nochmals erläutert zu werden.

Wegen der Maßnahme die Datenmenge mit verhältnismäßig geringem technischen Aufwand bereits auf der Sendeseite zu reduzieren, ist im Empfangssystem keinerlei zusätzlicher technischer Aufwand mehr erforderlich.

## Patentansprüche

1. Verfahren für ein digitales Datensendesystem (S) zur Übertragung von Daten, wobei gleiche Informationen mit mindestens zwei unterschiedlichen Bit-bzw. Kompressionsraten ausgesendet werden, **dadurch gekennzeichnet daß** ein Demultiplexer (DX) eines von mehreren Programmen auswählt und in sogenannte Packetized Elementary Streams zerlegt oder bei Vorliegen nur eines Programms dieses Programm in die Packetized Elementary Streams zerlegt, daß ein Variable-Length-Dekodierer (VLD) Run-Length-Wertepaare ermittelt, daß ein Bitstrommodifizierer (BSM) die Datenmenge reduziert, daß diese reduzierte Datenmenge im Variable-Length-Kodierer (VLC) kodiert wird, der von einem Bitratenkontroller (BRC) in einen Datenstrom mit einer vorgebbaren Bitrate gewandelt wird, und daß der Bitratenkontroller (BRC) den Bitstrommodifizierer (BSM) über eine Steuerleitung (SL) synchronisiert, um ein Überlaufen oder Leerlaufen des Variable-Length-Kodierers (VLC) mit Daten zu verhindern.

2. Verfahren für ein digitales Datensendesystem (S) zur Übertragung von Daten, **dadurch gekennzeichnet, daß** die Bitrate der von einer Datenquelle (PL) erzeugten Daten mittels eines Bitratenumsetzers (BRU) in eine niedere Bitrate umgewandelt wird, bevor sie in einen Übertragungskanal eingespeist werden, daß die von der Datenquelle (PL) gelieferten Daten in einem Encoder (EN) kodiert werden und an den Bitratenumsetzer (BRU) gesendet werden, daß im Bitratenumsetzer (BRU) ein Demultiplexer (DX) eines von mehreren Programmen auswählt und in sogenannte Packetized Elementary Streams zerlegt oder bei Vorliegen nur eines Programms dieses Programm in die Packetized Elementary Streams zerlegt, daß ein Variable-Lengrh-Dekodierer (VLD) Run-Length-Wertepaare ermittelt, daß ein Bitstrommodifizierer (BSM) die Datenmenge reduziert, daß diese reduzierte Datenmenge im Variable-Length-Kodierer (VLC) kodiert wird, der von einem Bitratenkontroller (BRC) in einen Datenstrom mit einer vorgebbaren Bitrate gewandelt wird, und daß der Bitratenkontroller (BRC) den Bitstrommodifizierer (BSM) über eine Steuerleitung (SL) synchronisiert, um ein Überlaufen oder Leerlaufen des Variable- Length-Kodierers (VLC) mit Daten zu verhindern.

3. Verfahren nach Anspruch 1, **dadurch gekennzeichnet, daß** gleiche Informationen auf mehreren Übertragungskanälen (K1, ..., Kn) mit unterschiedlichen Bit- bzw. Kompressionsraten ausgesendet werden.

4. Verfahren nach Anspruch 1 oder 3, **dadurch gekennzeichnet, daß** die Informationen gleichzeitig ausgesendet werden.

5. Verfahren nach Anspruch 3 oder 4, **dadurch gekennzeichnet, daß** die Bitrate der zu übertragenden Informationen für mindestens einen Übertragungskanal mittels eines Bitratenumsetzers (BRU) in eine niedere Bitrate umgewandelt wird.

6. Verfahren nach Anspruch 5, **dadurch gekennzeichnet, daß** die von einer Datenquelle (PL) gelieferten Daten in einem MPEG-Encoder (EN) kodiert werden und sowohl an einen ersten Kanalkodierer (KC1), der diese Daten an einen ersten Übertragungskanal anpaßt, als auch an den Bitratenumsetzer (BRU) gesendet werden, dessen Ausgangssignale an einen zweiten Kanalkodierer (KC2) gesendet werden, der die vom Bitratenumsetzer (BRU) gelieferten Daten an einen zweiten Übertragungskanal anpaßt.

7. Verfahren nach Anspruch 2, **dadurch gekennzeichnet, daß** als Encoder ein MPEG-Encoder (EN) vorgesehen ist.

8. Verfahren nach einem der Ansprüche 1 bis 7, **dadurch gekennzeichnet, daß** die vom Variable-Length-Dekodierer (VLD) ermittelten Run-Length-Wertepaare Frequenzinformationen für n x n Bildpunkte bilden und daß im Variable-Length-Kodierer (VLC) die vom Bitstrommodifizierer (BSM) gelieferte Datenmenge in einen dem MPEG2-Format entsprechenden Datenstrom kodiert wird.

9. Verfahren nach Anspruch 8, **dadurch gekennzeichnet, daß** der Bitstrommodifizierer (BSM) zur Reduzierung der Datenmenge die hohen vertikalen und die hohen horizontalen Frequenzen oberhalb eines vorgebbaren Schwellwertes zu null setzt.

10. Verfahren nach Anspruch 8, **dadurch gekennzeichnet, daß** der Bitstrommodifizierer (BSM) die Bewegungsvektoren verändert, um die Anzahl der Vektorinformationen und somit auch die Datenmenge zu reduzieren.

11. Verfahren (S) nach Anspruch 8, **dadurch gekennzeichnet, daß** der Bitstrommodifizierer (BSM) zur Datenreduzierung Skipped Macroblocks einfügt.

12. Verfahren nach Anspruch 8, **dadurch gekennzeichnet, daß** der Bitstrommodifizierer (BSM) zur Datenreduzierung Vorgängerbilder oder Vorgängermacroblocks wiederholt.

13. Verfahren nach einem der Ansprüche 8 bis 12, **dadurch gekennzeichnet, daß** über eine Reihenschaltung aus einem Variable-Length-Dekodierer (VLD), einem Bitstrommodifizierer (BSM), einem Variable-Length-Kodierer (VLC) und einem Bitratenkontroller (BRC) Videodaten von einem Demultiplexer (DX) zu einem Multiplexer (MX) übertragen werden, während über eine zusätzliche Leitung (ZL) Audio- und Zusatzdaten vom Demultiplexer (DX) zum Multiplexer (MX) übertragen werden, der die Video-, die Audio- und die Zusatzdaten wieder zusammenfügt, um einen MPEG-Standard-Datenstrom oder einen modifizierten MPEG-Datenstrom zu erzeugen..

14. Verfahren nach einem der vorangehenden Ansprüche, **dadurch gekennzeichnet, daß** die Informationen auf den einzelnen Übertragungskanälen (K1, ..., Kn) nach gebräuchlichen Standards übertragen werden.

15. Anordnung zur Durchführung des Verfahrens nach Anspruch 2, 5, 6, 7 oder 8, **dadurch gekennzeichnet, daß** der Bitratenumsetzer (BRU) aus einer Reihenschaltung aus einem Demultiplexer (DX), einem Variable-Length-Dekodierer (VLD), einem Bitstrommodifizierer (BSM), einem Variable-Length-Kodierer (VLC), einem Bitratenkontroller (BRC) und einem Multiplexer (MX) aufgebaut ist, wobei der Steuerausgang des Bitratenkontrollers (BRC) mit dem Steuereingang des Bitstrommodifizierers (BSM) verbunden ist und wobei der Demultiplexer (DX) über eine zusätzliche Leitung (ZL) mit dem Multiplexer (MX) verbunden ist.

16. Anordnung nach Anspruch 15, **dadurch gekennzeichnet, daß** an den Ausgang des Multiplexers (MX) ein Kanalkodierer (KC2) angeschlossen ist, der die Daten an den Übertragungskanal anpaßt und dessen Ausgang mit einer Sendeantenne (A3) verbunden ist.

17. Anordnung zur Durchführung des Verfahrens nach Anspruch 6, **dadurch gekennzeichnet, daß** der Ausgang des ersten Kanalkodierers (KC1) mit einer Satellitensendeantenne (A1) verbunden ist.

## Claims

1. Method for a digital data transmission system (S) for the transfer of data. in which identical information is transmitted at least at two different bit rates or compression rates. **characterised in that** a demultiplexer (DX) selects one of a plurality of programs and divides it into what are referred to as packetised elementary streams, or if only one program is present, divides this program into the packetised elementary streams. that a variable-length decoder (VLD) determines run-length value pairs, that a bit stream modifier (BSM) reduces the amount of data. that this reduced amount of data is coded in the variable-length coder (VLC) and converted into a data stream with a predetermined bit rate by a bit rate controller (BRC) and that the bit rate controller (BRC) synchronises the bit stream modifier (BSM) via a control line (SL) in order to prevent the variable-length coder (VLC) from overflowing with data or operating with no data.

2. Method for a digital data transmission system (S) for the transfer of data. **characterised in that** the bit rate of the data generated by a data source (PL) is converted into a lower bit rate by means of a bit rate converter (BRU) before it is fed to a transmission channel, that the data supplied by the data source (PL) is coded in an encoder (EN) and transmitted to the bit rate converter (BRU). that a demultiplexer (DX) selects one of a plurality of programs and divides it into what are referred to as packetised elementary streams, or if only one program is present. divides this program into the packetised elementary streams. in the bit rate converter (BRU). that a variable-length decoder (VLD) determines run-length value pairs. that a bit stream modifier (BSM) reduces the amount of data, that this reduced amount of data is coded in the variable-length coder (VLC) and converted into a data stream with a predetermined bit rate by a bit rate controller (BRC) and that the bit rate controller (BRC) synchronises the bit stream modifier (BSM) via a control line (SL) in order to prevent the variable-length coder (VLC) from overflowing with data or operating with no data.

3. Method according to claim 1, **characterised in that** identical information is transmitted over a plurality of transmission channels (K1, ..., Kn) at different bit rates or compression rates.

4. Method according to claim 1 or claim 3. **characterised in that** the information is transmitted simultaneously.

5. Method according to claim 3 or claim 4, **characterised in that** the bit rate of the information to be transmitted for at least one transmission channel is converted into a lower bit rate by means of a bit rate converter (BRU).

6. Method according to claim 5. **characterised in that** the data supplied by a data source (PL) is coded in an MPEG encoder (EN) and transmitted both to a first channel coder (KC1) which adapts this data to a first transmission channel and to the bit rate converter (BRU). the output signals of which are transmitted to a second channel coder (KC2) which adapts the data supplied by the bit rate converter (BRU) to a second transmission channel.

7. Method according to claim 2, **characterised in that** an MPEG encoder (EN) is provided as the encoder.

8. Method according to one of claims 1 to 7. **characterised in that** the run-length value pairs determined by the variable-length decoder (VLD) form frequency information for n x n pixels and that the amount of data supplied by the bit stream modifier (BSM) is coded into a data stream corresponding to MPEG2 format in the variable-length coder (VLC).

9. Method according to claim 8, **characterised in that** the bit stream modifier (BSM) resets the high vertical frequencies and the high horizontal frequencies to zero above a predetermined threshold value in order to reduce the amount of data.

10. Method according to claim 8. **characterised in that** the bit stream modifier (BSM) varies the motion vectors in order to reduce the amount of vector information and therefore also the amount of data.

11. Method (S) according to claim 8. **characterised in that** the bit stream modifier (BSM) inserts skipped macroblocks in order to reduce the data.

12. Method according to claim 8. **characterised in that** the bit stream modifier (BSM) repeats prior images or prior macroblocks in order to reduce the data.

13. Method according to one of claims 8 to 12, **characterised in that** video data is transmitted from a demultiplexer (DX) to a multiplexer (MX) via a series circuit consisting of a variable-length decoder (VLD), a bit stream modifier (BSM). a variable-length coder (VLC) and a bit rate controller (BRC), while audio data and additional data is transmitted from the demultiplexer (DX) via an additional line (ZL) to the multiplexer (MX) which reassembles the video data. audio data and additional data in order to produce an MPEG standard data stream or a modified MPEG data stream.

14. Method according to one of the preceding claims. **characterised in that** the information is transmitted over the individual transmission channels (K1. .... Kn) in accordance with conventional standards.

15. Arrangement for carrying out the method according to claim 2, 5, 6. 7 or 8, **characterised in that** the bit rate converter (BRU) is made up of a series circuit consisting of a demultiplexer (DX), a variable-length decoder (VLD). a bit stream modifier (BSM), a variable-length coder (VLC), a bit rate controller (BRC) and a multiplexer (MX), the control output of the bit rate controller (BRC) being connected to the control input of the bit stream modifier (BSM) and the demultiplexer (DX) being connected via an additional line (ZL) to the multiplexer (MX).

16. Arrangement according to claim 15, **characterised in that** a channel coder (KC2) which adapts the data to the transmission channel is connected to the output of the multiplexer (MX), its output being connected to a transmitting aerial (A3).

17. Arrangement for carrying out the method according to claim 6. **characterised in that** the output of the first channel coder (KC1) is connected to a satellite transmitting aerial (A1).

## Revendications

1. Procédé pour un système numérique d'émission de données (S) pour la transmission de données, des informations semblables étant émises avec au moins deux débits binaires ou deux taux de compression différents,
**caractérisé en ce qu'**
un démultiplexeur (DX) sélectionne un programme parmi plusieurs et le décompose **en ce que** l'on appelle des flux élémentaires sous forme de paquets (Packetized Elementary Streams) ou, lorsque ne se présente qu'un programme, décompose ce programme en flux élémentaires sous forme de paquets, un décodeur de longueur variable (VLD) acquiert des paires de valeurs Run Length (longueur de plage), un modificateur de débit binaire (BSM) réduit la quantité de données, cette quantité de données réduite est codée dans le codeur de longueur variable (VLC) qui est transformé par un contrôleur de débit binaire (BRC) en un flot de données de débit prédéterminable, et le contrôleur de débit binaire (BRC) synchronise le modificateur de débit binaire (BSM) par une ligne de commande (SL) pour empêcher un dépassement de capacité ou un fonctionnement vide de données du codeur de longueur variable (VLC).

2. Procédé pour un système numérique d'émission de données (S) pour la transmission de données,
**caractérisé en ce que**
le débit binaire des données créées par la source de données (PL) est transformé en un débit binaire inférieur au moyen d'un convertisseur de débit binaire (BRU) avant qu'elles ne soient fournies à un canal de transmission, les données fournies par la source de données (PL) sont codées dans un codeur (EN) et sont envoyées au convertisseur de débit binaire (BRU), dans le convertisseur de débit binaire (BRU) un démultiplexeur (DX) sélectionne un programme parmi plusieurs et le décompose **en ce que** l'on appelle des flux élémentaires sous forme de paquets ou, lorsque ne se présente qu'un programme, décompose ce programme en flux élémentaires sous forme de paquets, un décodeur de longueur variable (VLD) acquiert des paires de valeurs Run Length, un modificateur de débit binaire (BSM) réduit la quantité de données, cette quantité de données réduite est codée dans le codeur de longueur variable (VLC) qui est transformé par un contrôleur de débit binaire (BRC) en un flot de données de débit binaire prédéterminable, et le contrôleur de débit binaire (BRC) synchronise le modificateur de débit binaire (BSM) par une ligne de commande (SL) pour empêcher un dépassement de capacité ou un fonctionnement vide de données du codeur de longueur variable (VLC).

3. Procédé selon la revendication 1,
**caractérisé en ce que**
des informations semblables sont émises sur plusieurs canaux de transmission (K1, ..., Kn) avec des débits binaires ou des taux de compression différents.

4. Procédé selon la revendication 1 ou 3,
**caractérisé en ce que**
les informations sont émises simultanément.

5. Procédé selon la revendication 3 ou 4,
**caractérisé en ce que**
le débit binaire des informations à transmettre est transformé en un débit binaire inférieur au moyen d'un convertisseur de débit binaire (BRU) pour au moins un canal de transmission.

6. Procédé selon la revendication 5,
**caractérisé en ce que**
les données fournies par une source de données (PL) sont codées par un codeur MPEG (EN) et sont transmises aussi bien à un premier codeur de canal (KC1) qui adapte ses données à un premier canal de transmission, qu'également à un convertisseur de débit binaire (BRU) dont les signaux de sortie sont envoyés à un deuxième codeur de canal (KC2) qui adapte les données fournies par le convertisseur de débit binaire (BRU) au deuxième canal de transmission.

7. Procédé selon la revendication 2,
**caractérisé en ce qu'**
un codeur MPEG (EN) est prévu en tant que codeur.

8. Procédé selon l'une quelconque des revendications 1 à 7,
**caractérisé en ce que**
les paires de valeurs Run Length acquises par le décodeur de longueur variable (VLD) forment des informations de fréquence pour n x n points image, et dans le codeur de longueur variable (VLC) les données fournies par le modificateur de débit binaire (BSM) sont codées en un flot de données correspondant au format MPEG2.

9. Procédé selon la revendication 8,
**caractérisé en ce que**
le modificateur de débit binaire (BSM) met à zéro les fréquences verticales hautes et horizontales hautes excédant une valeur seuil prédéterminable.

10. Procédé selon la revendication 8,
**caractérisé en ce que**
le modificateur de débit binaire (BSM) modifie les vecteurs de mouvement de façon à réduire le nombre d'informations sur les vecteurs, et ainsi également la quantité de données.

11. Procédé selon la revendication 8,
**caractérisé en ce que**
le modificateur de débit binaire (BSM) insère des macroblocs sautés (Skipped Macroblocks) pour la réduction de données.

12. Procédé selon la revendication 8,
**caractérisé en ce que**
le modificateur de débit binaire (BSM) répète des images précédentes ou des macroblocs précédents pour la réduction de données.

13. Procédé selon l'une quelconque des revendications 8 à 12,
**caractérisé en ce que**
par un circuit en série d'un décodeur de longueur variable (VLD), d'un modificateur de débit binaire (BSM), d'un codeur de longueur variable (VLC) et d'un contrôleur de débit binaire (BRC), des données vidéos sont transmises d'un démultiplexeur (DX) vers un multiplexeur (MX), alors que, par une ligne supplémentaire (ZL), des données audio et supplémentaires sont transmises du démultiplexeur (DX) vers le multiplexeur (MX) qui assemble à nouveau les données vidéo, audio, et supplémentaires, de façon à créer un flot de données standard MPEG ou un flot de données MPEG modifié.

14. Procédé selon l'une quelconque des revendications précédentes,
**caractérisé en ce que**
les informations sont transmises par chacun des canaux (K1, ..., Kn) selon les standards usuels.

15. Dispositif pour appliquer le procédé selon la revendication 2, 5, 6, 7 ou 8,
**caractérisée en ce que**
le convertisseur de débit binaire (BRU) est élaboré à partir d'un circuit série d'un démultiplexeur (DX), d'un décodeur de longueur variable (VLD), d'un modificateur de débit binaire (BSM), d'un codeur de longueur variable (VLC), d'un contrôleur de débit binaire (BRC) et d'un multiplexeur (MX), la sortie de commande du contrôleur de débit binaire (BRC) étant reliée avec l'entrée de commande du modificateur de débit binaire (BSM) et le démultiplexeur (DX) étant relié au multiplexeur (MX) par une ligne supplémentaire (ZL).

16. Dispositif selon la revendication 15,
**caractérisée en ce qu'**
un codeur de canal (KC2) est relié à la sortie du multiplexeur (MX) qui adapte les données au canal de transmission et dont la sortie est reliée avec une antenne de transmission (A3).

17. Dispositif pour appliquer le procédé selon la revendication 6,
**caractérisée en ce que**
la sortie du premier codeur de canal (KC1) est reliée à une antenne satellite (A1).
